(19) **Europäisches Patentamt**
**European Patent Office**
**Office européen des brevets**

(11) **EP 1 402 980 B1**

(12) **EUROPEAN PATENT SPECIFICATION**

(45) Date of publication and mention
of the grant of the patent:
**17.10.2007 Bulletin 2007/42**

(51) Int Cl.:
*B23B 39/00* (2006.01)   *B23B 39/22* (2006.01)

(21) Application number: **03021293.0**

(22) Date of filing: **19.09.2003**

(54) **Apparatus for drilling plates of glass, marble and similar stony materials**

Bohrvorrichtung zum Bohren von Platten aus Glas, Marmor oder ähnlichen steinartigen Materialen

Dispositif de perçage pour percer des plaques en verre, marbre ou matériaux pierreux similaires

(84) Designated Contracting States:
**AT BE BG CH CY CZ DE DK EE ES FI FR GB GR HU IE IT LI LU MC NL PT RO SE SI SK TR**

(30) Priority: **25.09.2002 IT to20020841**

(43) Date of publication of application:
**31.03.2004 Bulletin 2004/14**

(73) Proprietor: **BIESSE S.p.A.**
**61100 Pesaro (IT)**

(72) Inventor: **Belli, Marco**
**61030 Calcinelli di Saltara (Pesaro) (IT)**

(74) Representative: **Gallarotti, Franco et al**
**Buzzi, Notaro & Antonielli d'Oulx Srl,**
**Via Maria Vittoria, 18**
**10123 Torino (IT)**

(56) References cited:
**EP-A- 0 292 712       GB-A- 2 007 122**
**US-A- 4 579 483       US-A- 5 379 510**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

<u>TEXT OF THE DESCRIPTION</u>

The present invention relates to an apparatus for drilling plates made of glass, marble and similar stony materials, having a supporting frame and at least a drilling device mounted onto said frame, said device comprising two opposite drilling heads between which a plate under working is supported by supporting means, each drilling head comprising a first drilling assembly having a spindle for controlling the rotation of a first tool, said first tool being movable towards the plate according to a respective drilling axis so as to make a first incision onto the plate.

The apparatuses indicated above, also known as bi-frontal drilling machines, are used to make onto a plate under working one or more through holes, which are necessary to fasten to said plate various components such as handles, hinges, stops, etc. Said machines can make a through hole by carrying out first a circular blind incision onto a first surface of the plate and then completing drilling operations by introducing a second tool into the opposite surface of the plate. Such an apparatus is known for example from GB-A-2007122.

To this purpose bi-frontal drilling machines are usually equipped with a plurality of drilling devices placed side by side, each comprising an upper drilling head and a lower drilling head, opposite to one another and supported by the same support coupled with the supporting structure of the machine so as to be moved horizontally according to two axes perpendicular to one another. The two drilling heads, basically identical, comprise each a spindle actuating the drilling tool; the position of said spindle can be varied axially with respect to the head, i.e. vertically according to a third axis, so as to move the respective tool closer and away from the plate under working.

In some cases the drilling device is mounted onto a frame so as to move only according to the aforesaid third axis, and the machine is equipped with conveying means for shifting the plate under working according to the two horizontal axes.

In drilling machines as indicated above the heads of the drilling devices have quite large overall dimensions; that is why the minimum center distance between two holes obtained simultaneously through two adjacent drilling devices of the machine cannot normally be below 180 mm.

If two holes having a smaller center distance than the one indicated above, for instance of 120 mm, have to be obtained on the plate, it is therefore necessary to make the first of the two holes with a drilling device and then, after re-positioning the same or another drilling device in the convenient place, make the second hole.

Said operating mode makes plate working times longer and therefore involves a lower productivity of the drilling machine. The main aim of the present invention is to solve said drawback.

In the light of achieving said aim, the object of the invention is a drilling apparatus comprising the characteristics mentioned at the beginning of the present description, and further characterized in that

- each drilling head comprises at least a second drilling assembly, which can move on said head on a path developing substantially perpendicularly with respect to the drilling axis of the first tool, the second drilling assembly having a second spindle for controlling the rotation of a second tool, the second tool being movable according to a respective drilling axis so as to make a respective incision onto the plate, the drilling axis of the second tool being substantially parallel to the drilling axis of the first tool (U1, U3), and in that

- the drilling device comprises adjustment means for positioning the second assembly of each head in several spots on its respective path, so that the drilling axis of the second tool can take several alternative parallel positions with respect to the drilling axis of the first tool.

The specific characteristics and the advantages of the invention will be evident from the following description with reference to the accompanying drawings, provided as a mere non-limiting example, in which:

- Figure 1 is a schematic partial perspective view of a drilling apparatus carried out according to the invention;

- Figures 2 and 3 are schematic partial perspective views of an operating head belonging to a drilling device of the apparatus of Figure 1, in two different working conditions;

- Figures 4 and 5 are schematic partial plan views of the aforesaid operating head, in both working conditions as referred to in Figures 2 and 3, respectively;

- Figure 6 is a perspective view of the aforesaid operating head, sectioned according to line VI-VI of Figure 4;

- Figure 7 is a perspective view of some components of the aforesaid operating head;

- Figure 8 is a longitudinal section of an actuating system of a spindle which the aforesaid operating head is equipped with;

- Figure 9 is a schematic partial perspective view of two operating heads belonging to a drilling device of an apparatus carried out according to a possible variant of the invention.

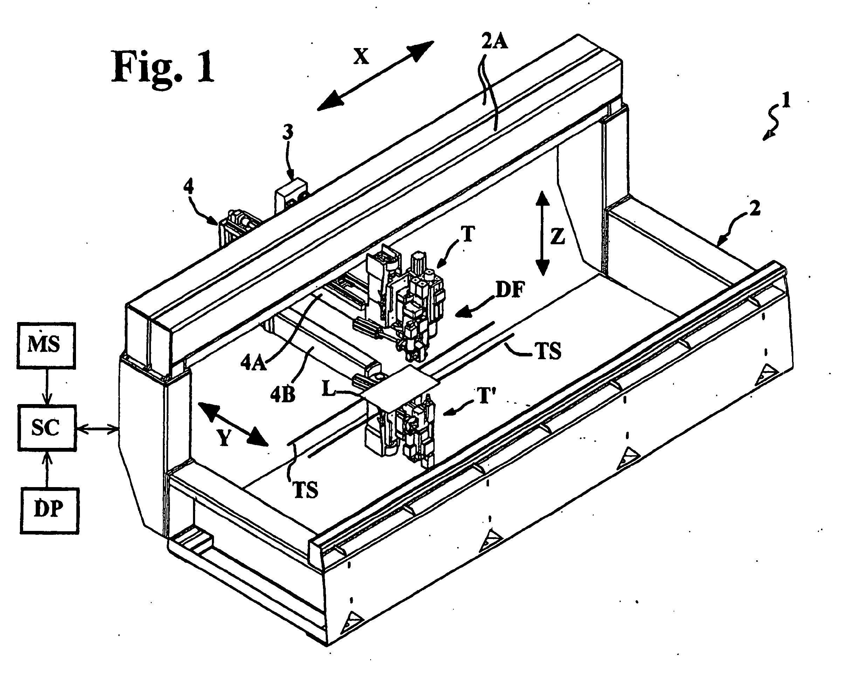

With reference to Figure 1, number 1 globally refers to an apparatus for drilling glass plates carried out according to the invention; note that in said Figure the apparatus 1 is shown in schematic partial form, only with those elements that are necessary to understand the invention.

The apparatus 1 is equipped with a supporting frame 2 comprising an upper ledger 2A onto which a carriage 3 is mounted, which can slide on said ledger according to an axis referred to with X; the means used for coupling, controlling and shifting the carriage 3 with respect to the ledger 2 can be of any known type.

The carriage 3 is slidingly coupled with a support 4, substantially U-shaped, having two parallel arms 4A and 4B, onto whose free end a respective drilling head T, T' is mounted; the drilling heads T, T' are identical and opposite, since the apparatus 1 in the exemplified case is a horizontal bi-frontal drilling machine for making through holes onto a glass plate L; in said light, therefore, the lower head T' makes blind circular incisions starting from the lower surface of the plate L, and the upper head T ends the drilling operations from the upper surface of the plate L.

Note that in practice the apparatus 1 can be equipped with a plurality of drilling devices, for instance four of them, arranged one beside the other, each comprising a carriage 3, a support 4 and two drilling heads T, T', whose position is controlled by a control unit of the apparatus; for better understanding, however, Figure 1 shows only one drilling device, globally referred to with DF, taking for granted that the other drilling devices, if present, are identical.

The support 4 is coupled with the carriage 3 so as to slide on a second axis, referred to with Y, perpendicularly to axis X; again the means used for coupling, controlling and shifting the support 4 with respect to the carriage 3 can be of any known type.

The plate L is kept in horizontal position, so as to be worked by the device DF, by means of known prop and blocking means, schematically referred to with TS, which basically form a rest plane extending at an intermediate height with respect to those of the arms 4A and 4B of the support 4. Said means can consist of a longitudinal conveyor, arranged in the direction of axis X and having a blocking system for the plate to be worked on its respective drilling device DF; as an alternative, the means TS can consist of ledgers extending perpendicularly to axis X, equipped with pneumatic suction cups; another possibility can consist in carrying out a mechanical blocking of the plate L.

As shall be evident from the following, according to the present invention, on each drilling head T, T' it is provided for at least a first and a second spindle for respective tools; the second spindle is mounted movably onto the head T, T', so that the drilling axis of its respective tool can be shifted in a direction basically perpendicular to said drilling axis. In other words, therefore, the second spindle can be moved on the head T, T' so that the drilling axis of its respective tool can be placed in several alternative parallel positions with respect to the drilling axis of the first tool.

The movement of the second spindle can take place in linear direction, according to an axis substantially perpendicular with respect to the drilling axis of the tools;

preferably, the first spindles are mounted onto the heads T, T' so as to carry out also angular movements around an axis substantially parallel to the drilling axis of its respective tool, so as to increase the operating flexibility of the drilling device DF.

The position of the first and second spindle of every head with respect to one another can therefore be varied to one's own needs, and after positioning the drilling device DF in a programmed place the latter can simultaneously make two holes at the desired distance, even a very small one, onto the plate L. It is thus possible to avoid the need for a re-positioning of the whole drilling device DF, as required in the prior art, with subsequently shorter working times.

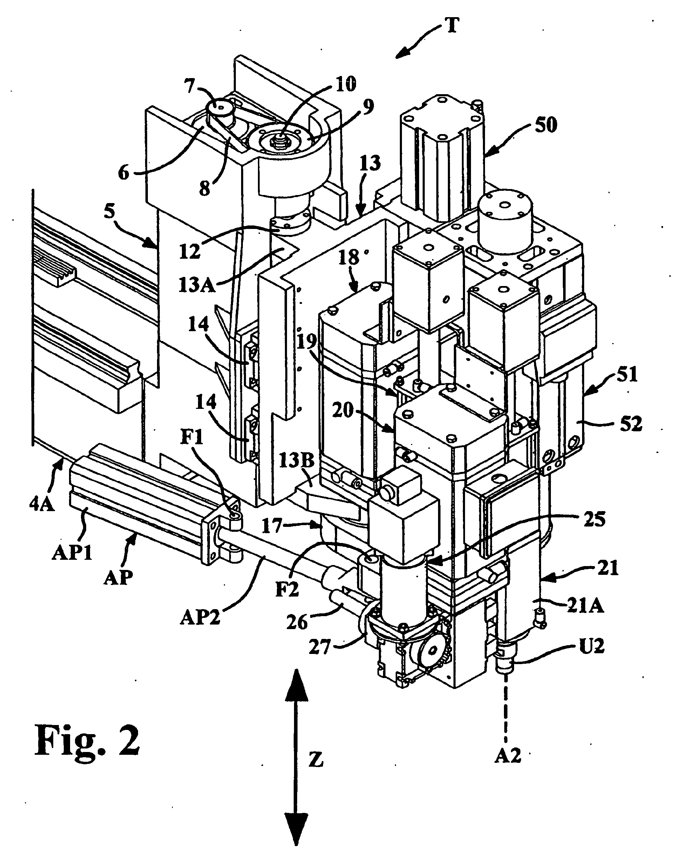

Figures 2-7 show one of the drilling heads belonging to a device DF carried out according to the aforesaid particularly advantageous embodiment of the invention; in said figures the upper head T of the device DF is visible, taking for granted that the lower head T' of said device is identical to the one shown.

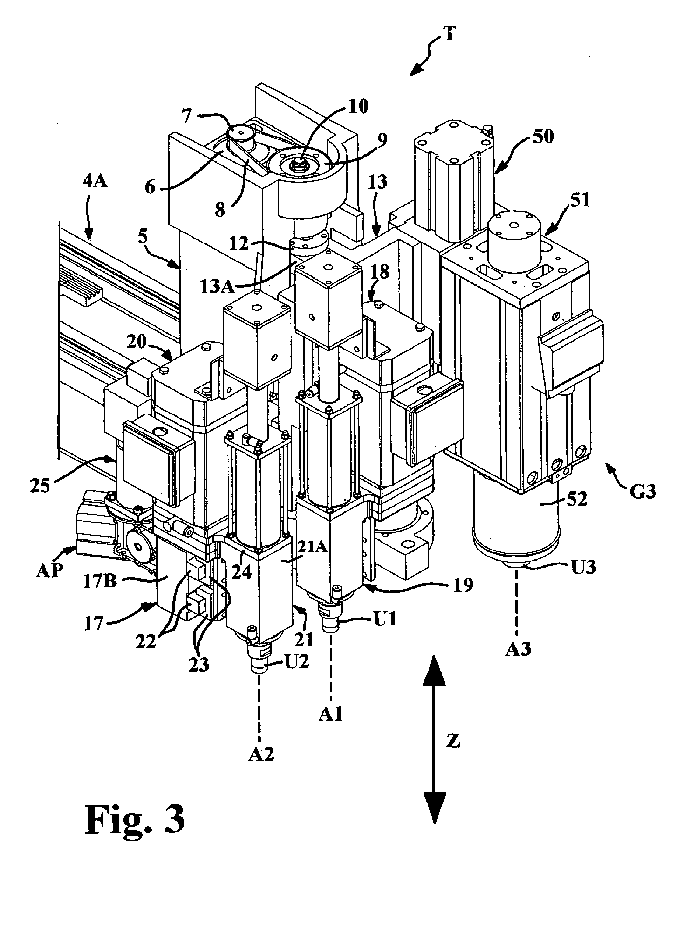

As can be inferred from Figures 2 and 3, the arm 4A of the support 4 is stiffly associated with a body 5 housing a bi-directional electric motor 6, onto whose shaft a first pulley 7 is fitted; the pulley 7 transfers though a chain or belt 8 the movement generated by the motor 6 to a second pulley 9.

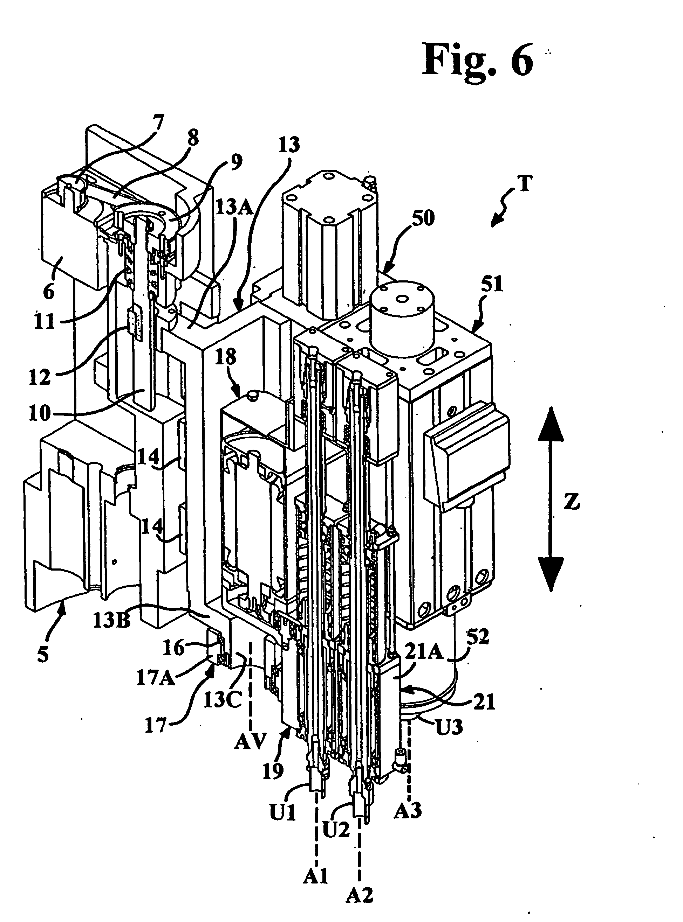

As can be seen in Figure 6, the pulley 9 is fitted onto a threaded shaft 10, which is driven during rotation through a series of bearings 11, housed in a corresponding seat defined in the body 5. The shaft 10 is operatively coupled with a die or bushing provided with female thread, referred to with 12, which is integral with an extension 13A of a slide globally referred to with 13; thus, thanks to the rotation of the shaft 10 generated by the motor 6 working, the bushing 12 can move along said shaft according to an axis referred to with Z, pulling with it the slide 13 upwards or downwards, depending on the sense of rotation of the motor 6.

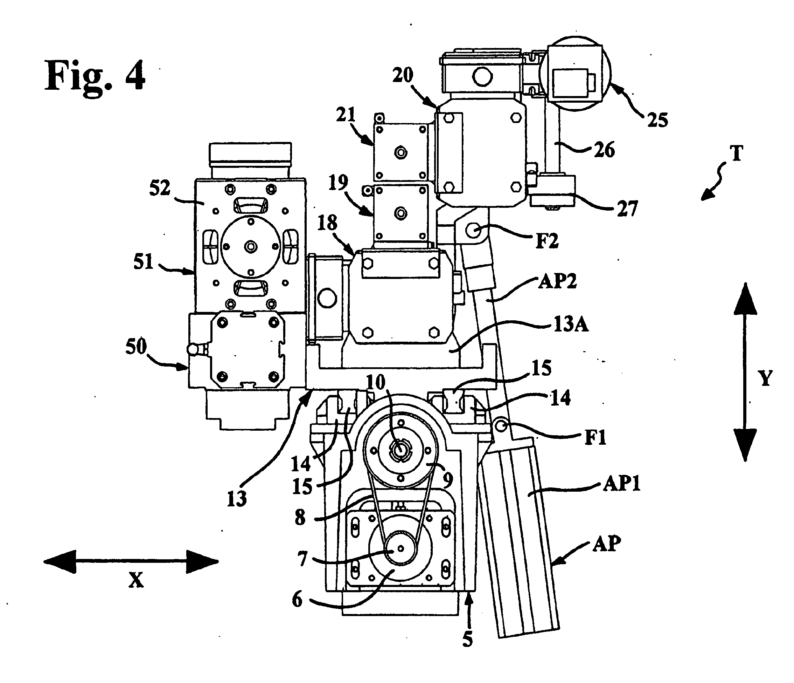

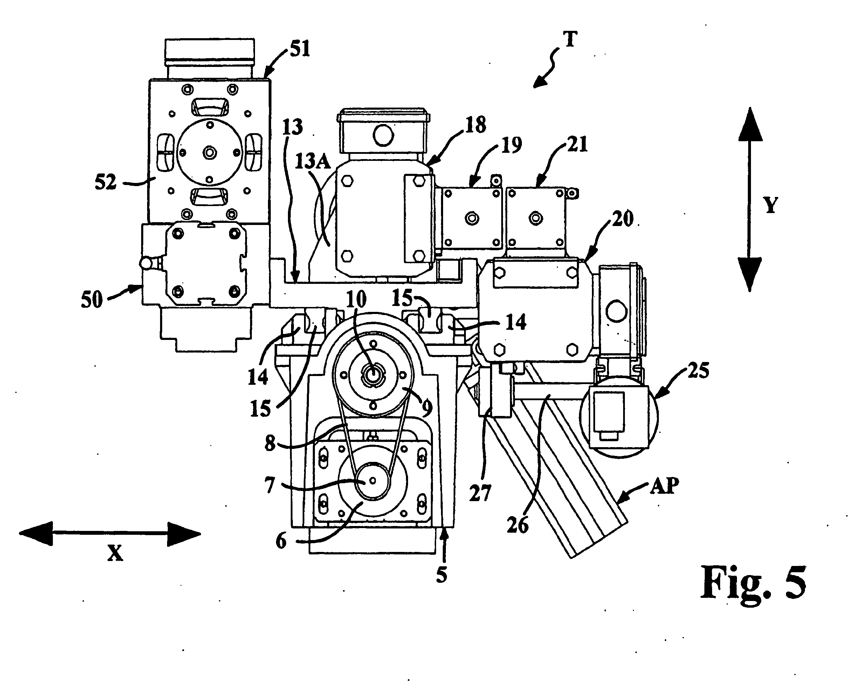

In order to help a precise movement according to axis Z, reciprocally compatible guiding elements are provided between the slide 13 and the body 5; as can be inferred in particular from Figures 4 and 5, said means consist in the exemplified case of two U-shaped guides, referred to with 14, fastened to a vertical surface of the body 5, into which respective rails are fitted, referred to with 15, which are integral with a vertical surface of the slide 13.

The slide 13 also has a portion 13B extending perpendicularly with respect to the vertical surface with the rails 15; as can be seen for instance in Figure 6, a tubular extension 13C protruding downwards is defined in the portion 13B; a fitting portion 17A belonging to an angularly mobile bracket, globally referred to with 17, is hooked onto said extension with the interposition of a rolling-contact bearing 16.

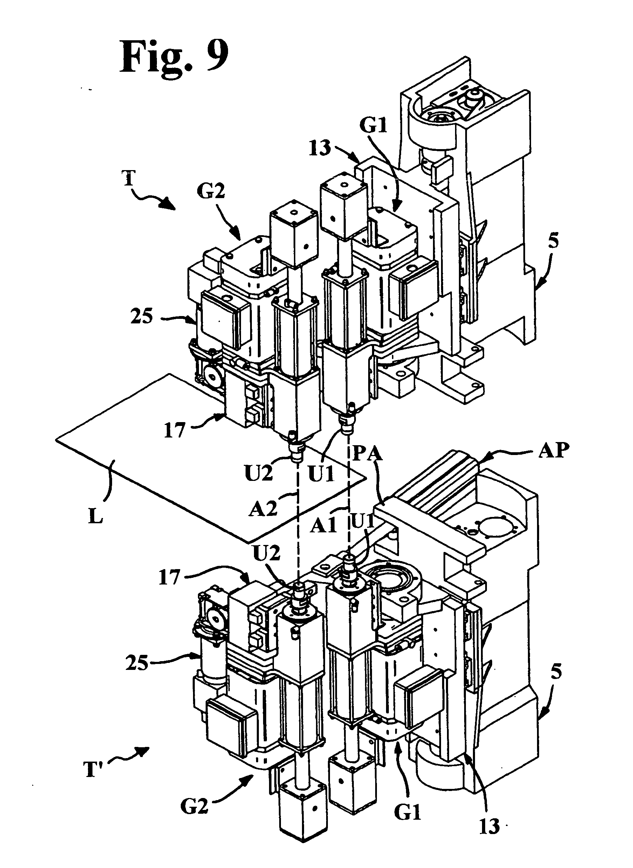

AP shows in the figures a pneumatic actuator, whose cylinder AP1 is hinged to the body 5 in a place referred to with F1 in Figures 2 and 4; on the other hand, the end of the stem AP2 of the actuator AP is hinged to the bracket 17, in a place referred to with F2 (note that for greater clarity Figures 1-8 do not show the portion of the body 5 to which the cylinder AP1 is hinged; said portion can however be seen in Figure 9, where it is referred to with PA).

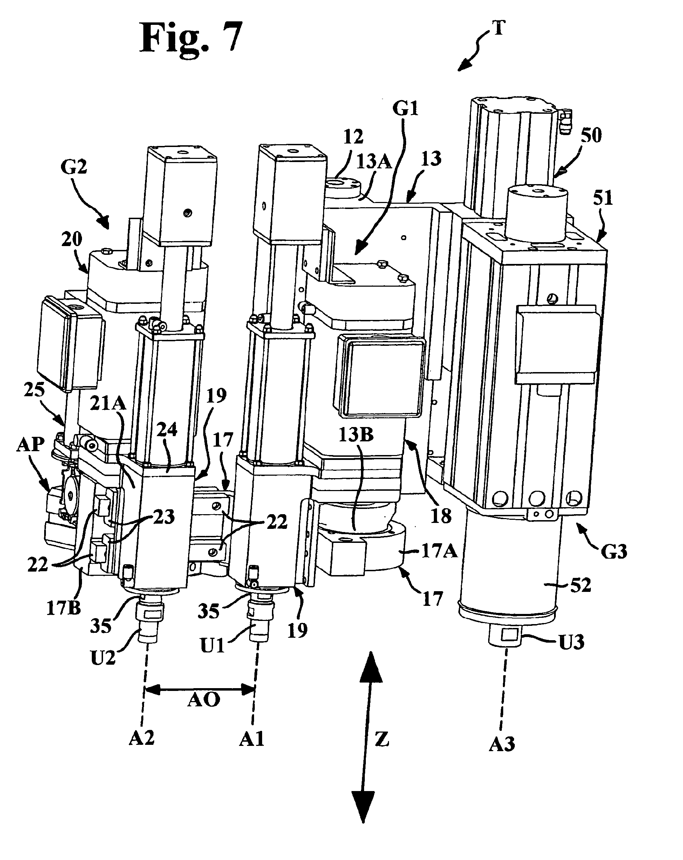

After the actuator AP is started, the bracket 17 can be moved angularly with respect to the slide 13 according to an axis referred to with AV in Figures 6 and 7, i.e. it can make angular movements around the rotation pin generated by the coupling of the tubular extension 13C of the slide 13, the bearing 16 and the fitting portion 17A of the bracket 17.

To the bracket 17 is fastened a first electric motor 18, which is operatively associated to a respective driving device, globally referred to with 19, controlling the rotation of a drilling tool U1, having a respective drilling axis referred to with A1 in Figure 7; the driving device 19 is fastened to the motor 18 or to the bracket 17, laterally with respect to the motor 18.

Number 20 refers to a second electric motor, which is operatively associated with a respective driving device, referred to with 21, causing the rotation of a drilling tool U2, having a corresponding drilling axis referred to with A2 in Figure 7.

The drilling assembly referred to with G2 in Figure 7, comprising the motor 20 and the corresponding device 21, is mounted onto sliders (23), so that its operating position can be varied according to an axis referred to with AO, substantially perpendicular with respect to the drilling axis A2 of the tool U2. Thus, obviously, the relative position of the drilling assembly G2 can be varied with respect to the drilling assembly referred to with G1, comprising the motor 18 and the corresponding gear 19.

As can be inferred from Figure 7, in order to enable the shifting of the assembly G2, the bracket 17 has a portion 17B to which two parallel rails 22 extending horizontally are fastened; respective U-shaped sliders or guides, referred to with 23, integral with a body 21A belonging to the device 21, are fitted onto said rails 22; the body 21A of the device 21 is also integral with a plate 24 supporting the motor 20. As can be inferred, the sliding movement of the guides 23 on the rails 22 (and therefore of the device 21 which supports the motor 20 through the plate 24) allows to move the drilling assembly G2 along axis AO, and therefore also to move it away or closer with respect to the drilling assembly G1.

The shifting of the group G2 according to axis AO is motorized. To this purpose, as can be inferred for instance in Figure 2, onto the surface of the portion 17B of the bracket 17 opposite the one to which the rails 22 are fastened, is anchored an electric motor, referred to with 25; as can be inferred from said Figure 2 and from Figures 4 and 5, the output shaft of the motor 25 is operatively connected through driving means known per se to a threaded shaft 26, on which can shift a die or bushing provided with female thread, referred to with 27, anchored to the plate 24. Thanks to the rotation of the shaft 26 generated by the motor 25 working, the die 27 can move along said shaft pulling with it said plate 24, and therefore the device 21 and the motor 20, to the right or to the left, depending on the sense of rotation of the motor 25; the drilling distance between tools U1 and U2 can thus be varied between a minimum and a maximum value, which by way of mere non-limiting example can be of 64 mm and 128 mm, respectively.

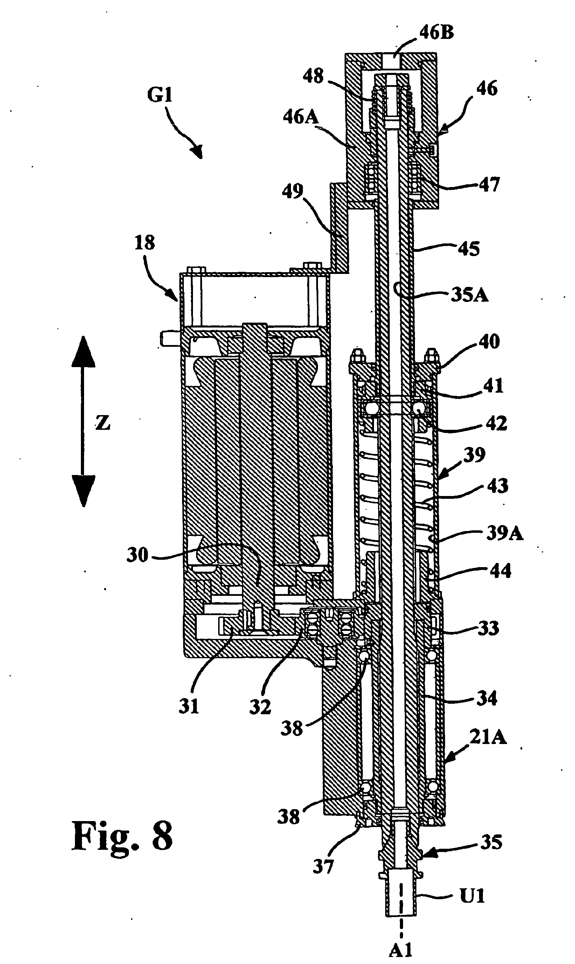

In the embodiment shown in the figures by way of example, the devices 19 and 21 are placed laterally with respect to the motor 18 and 20. Figure 8 shows by way of example a possible driving system for motion transmission between the motor 18 and the device 19. In said figure number 30 refers to the shaft of motor 18, to whose one end a first toothed wheel 32 is fitted, which is engaged to a second toothed wheel 32; said second toothed wheel 32 is engaged in its turn to the outer teeth of a crown 33, with which a short tube 34 is integral, whose inner surface is provided with a plurality of longitudinal reliefs.

Number 35 refers to a shaft representing the spindle of the tool U1, which passes through the crown 33 and the tube 34; longitudinal grooves are provided on the outer surface of the shaft 35, into which grooves the aforesaid reliefs of the tube 34 are engaged. The shaft or spindle 35 can thus move vertically with respect to the crown 33 and to the tube 34, though being constantly engaged to the latter, and receive the movement of rotation from the motor 18.

The short tube 34 is housed within a chamber defined in the body 21A, closed on its bottom by a sealing plug 37 provided with a central passage for the shaft 35; the tube 34 is guided in its movement of rotation within said chamber by two bearings 38.

Number 39 refers to a second body, sealingly coupled with the body 21A and belonging to a pneumatic actuator so as to generate the axial movement of the shaft 35. Within the body 39 is defined a chamber 39A, closed on its top by a sealing plug 40 having a central passage for the shaft 35; within the chamber 39A there is a ring-shaped element 41 working as a piston, having a respective peripheral gasket sealing the inner surface of the body 39. The ring-shaped element 41 houses a ball bearing 42, fitted onto the shaft 35, so as to help the rotation of the latter and keep its correct axial position with respect to the lower body 21A.

Within the chamber 39A there is a return spring 43, operating between the ring-shaped element 41 and a respective positioning element 44, placed at the end of said chamber close to the body 21A. Number 45 refers to a protection tube connected to the ring-shaped element 41, and therefore axially moving with the latter, within which the shaft 35 can rotate; the upper end of the tube 45 is connected to the body 46A of a water distributor, necessary for the operation of tool U1.

The body 46A has an opening 46B to which a water inlet tube, not shown, is connected, and is equipped inside with a pair of bearings 47, so as to help the rotation of the shaft 35; a compensation spring 48 works between the distributor 46 and the shaft 35.

Number 49 refers to a plate, fastened to the body of the motor 18, against which the body 46A of the distributor 46 can scrape when the latter moves axially following the shaft 35; the function of the plate 49 is to prevent possible angular movements of the body 46A.

The lowering of the shaft or spindle 35, and therefore of the tool U1 along its respective drilling axis A1, is obtained by letting compressed air in through a suitable intake present in the plug 40 of the chamber 39A. Air thus pushes the ring-shaped element 41 downwards and compresses the spring 43; thus, the bearing 42 being fitted to the shaft 35, the latter can lowers, pulling with it the tube 45 and the water distributor 46. As referred to above the tool U1 is selected for then drilling the glass plate under working, through the drilling axis X of Figure 1; as was said, the rotation of the shaft 35 and therefore of the tool U1, as well as its axial movement, is possible thanks to the driving system comprising the gears 31-33 and the rotating tube 34, engaged with the longitudinal grooves of the shaft 35.

During incision operations, the distributor 46 is supplied with water, so that the latter can get into the axial cavity, referred to with 35A, with which said shaft 35 is provided; water can then reach the tool U1, which is also provided with an axial cavity, so as to cool said tool while cutting and removing glass fragments taken away from the plate under working.

Once the incision has been made onto the plate under working, the shaft 35 goes back to its initial position by letting air out of chamber 39A, so that the elastic reaction of the spring 43 can lead the ring-shaped element 41 back to the top of said chamber.

The drilling assembly G2 is equipped with a driving system and with a pneumatic actuating system wholly similar to those shown by way of example in Figure 8; both drilling assemblies G1, G2 can thus be actuated one independently from the other, so as to generate both the rotation of the corresponding drilling tool A1, A2, and the removal and approach of the latter with respect to the plate under working L, so as to obtain a hole.

It is evident how through the invention the device DF enables to make simultaneously a pair of holes; the shifting of the assembly G2 with respect to the assembly G1 enables to vary rapidly the distance between the two holes of said pair, without re-positioning every time the device DF, thus greatly reducing working times and subsequently increasing the productivity of the apparatus 1 with respect to prior art.

Moreover, as mentioned before, the angular position of the bracket 17 can be varied with respect to the slide 13, around axis AV of Figures 6 and 7, by starting the pneumatic actuator AP. Said characteristic of the invention is evident, with reference to the embodiment of the invention providing for both drilling assemblies G1 and G2, from the comparison between Figures 5 and 6.

Said figures show the two limit positions of the angular movement admitted for the bracket 17, and therefore for both drilling assemblies G1 and G2. Note that by suitably supplying the actuator AP, both drilling assemblies can be placed in any intermediate angular position between said two limit positions shown in Figures 5 and 6. As can be inferred, the possibility of angular movement of the assemblies G1, G2 around axis AV gives the drilling device DF a further degree of flexibility for making through holes onto the glass plate L under working, limiting the movement of the support 4 of the heads T, T' and thus enabling to increase the productivity of the apparatus 1.

The electric motors 18 and 20 can be quite small, so as to limit the overall dimensions of both assemblies G1 and G2; in said light, considering the low power of said motors, on each head T, T' the assemblies G1, G2 shall preferably be used with tools U1, U2 making small-size holes, up to a limit diameter. In order to make holes with larger diameter, each head T, T' can be suitably equipped with a further drilling assembly, referred to with G3 in Figures 3 and 7. The drilling assembly G3 comprises an actuator, for instance a pneumatic cylinder 50, and a respective driving device 51, including an electric motor 52 for actuating a spindle associated with a respective drilling tool U3 having a drilling axis A3.

The actuator 50 is fastened to one side of the slide 13, and the body of said actuator is slidingly coupled with the body of the device 51, for instance through a respective slide and respectively engaging guiding means, not shown in the figures, similar to those previously referred to with 14 and 15 (provided between the body 5 and the slide 13, see Figures 4 and 5). The movement of the device 51 upwards of downwards is controlled by the pneumatic cylinder 50, whose stem (not shown) is connected to the outer body or, if present, to the slide of said device.

The accompanying figures do not show for reasons of clarity cables and pipes required for the operation of the various electric and pneumatic actuators, as well as of the water distributor 46; connecting and supplying modes and means for said elements are anyhow known per se.

As previously mentioned, the apparatus 1 is equipped with a control system, referred to with SC in Figure 1, preferably an electronic programmable system, for controlling in ways known per se the shifting of the carriage 3 on axis X, the shifting of the support 4 on axis Y, the shifting of the slide 13 on axis Z, the shifting of the drilling assembly G2 on axis AO, the axial shifting of the spindle-equipped devices 19, 21, 51, and therefore of the tools U1, U2 and U3, on drilling axes A1, A2 and A3, the angular shifting of the bracket 17 with respect to the slide 13. It is also evident that to said purpose the control system SC shall comprise suitable detecting means, schematically represented by the bloc referred to with MS in Figure 1, checking the position reached by the various elements shifted; said detecting means can be carried out according to any known technique, for instance as linear or rotating encoders, operatively associated with the various actuators provided for.

The operation of the apparatus 1 occurs simply and rapidly after starting a respecting working program, stored in the control system SC; in order to execute said program, an operator shall obviously input through a programming device, referred to with DP in Figure 1, some operating parameters, comprising for instance plan dimensions of the plate L under working, its nominal thickness and the position in which through holes have to be made, the distance and/or the angular position between two holes, etc.

If holes with small center distance have to be made onto the plate L, the drilling device DF is brought to the correct position with respect to the plate L, which position is automatically determined by the control system SC in ways known per se; this is obtained by shifting the carriage 3 along the ledger 2A and by shifting the support 4 with respect to the carriage 3. Then the slide 13 of each head T, T' is brought close to a respective surface of the plate L up to a given dimension, which is determined by the operating program of the apparatus 1; as was explained before, the shifting of the slide 13 is controlled by the motor 6.

Then the control system SC controls the motor 25 of each head T, T' so as to shift the drilling assembly G2 with respect to the drilling assembly G1, depending on the desired distance for the pair of holes to be made; if necessary, the angular position of the two assemblies G1 and G1 can obviously be changed also angularly by starting the actuator AP, as was explained before.

The motors 18 and 20 are then started, thus actuating the gears 19, 21 causing the rotation of the tools U1, U2; subsequently the pneumatic actuating systems described with reference to Figure 8 are then actuated, so as to make the tools U1, U2 move forward towards the corresponding surface of the plate L and the shifting of the slide 13 shall enable the drilling operation.

The drilling assembly G3 can be used to make single holes onto the plate L, having a larger diameter as could be obtained with tools U2 and/or U1; the assembly G3 has to be used basically in the same way as just explained for assemblies G1 and G2.

It should be pointed out that the pneumatic actuating system previously described with reference to Figure 8 enables to shift selectively the tools U1 and U2 according to their respective drilling axes A1, A2; this means that also the assemblies G1 and G2 can be used singularly, i.e. one independent from the other, in order to make single holes onto the plate L. In said light it should then be pointed out that the tools U2 of the two heads T, T' can also be used to make a first hole onto the plate L and can then be shifted linearly or angularly, by actuating the motors 25 or the actuators AP, in order to make a second hole onto the plate L.

The three assemblies G1, G2 and G3 can obviously also be used to make three holes onto the same plate L simultaneously.

The invention has been described with particular reference to a bi-frontal drilling machine in which a plate L under working lies horizontally on respective support means TS in a stationary position. The invention also applies to the case of vertical drilling machines, i.e. in which a plate under working is pushed forward in vertical position or slightly inclined between two uprights, each of them being associated with a respective drilling head to be shifted vertically on said uprights. Obviously, the invention also applies to other known types of frames; for instance, the drilling device DF can be mounted onto a frame so as to be stationary in X and Y direction, in which case the support means TS shall shift the plate on said two axes.

Obviously, the inventive idea being unchanged, construction details and embodiments can widely vary with respect to what has been described and disclosed by mere way of example, without leaving the framework of the present invention.

The drilling assemblies G1 and G2 could be similar to the drilling assembly G3, i.e. each comprising an actuator (for instance similar to the actuator 50) carrying out the movement of a respective device having its own electric motor (similarly to the device 51 of the assembly G3, which integrates the motor 52).

As was previously mentioned, the assembly G3 is preferably provided when the size chosen for the motors 18, 20 does not enable the use of respective drilling tools for making large-diameter holes; moreover, in a possible embodiment of the invention, each head T, T' of the drilling device DF could be equipped only with the two assemblies G1 and G2, having electric motors whose size and power are higher than the case previously exemplified. Such an embodiment is represented in Figure 9, only for the two heads T, T', in which figure the same reference numbers as in the previous figures refer to elements technically equivalent to those already described.

In another possible execution variant, the assembly G1 could be in stationary position with respect to the slide 13, i.e. integral with the latter and not with the plate 17, so that only the assembly G2 is angularly movable.

The control system SC according to the invention can be programmed for operating according to a first working cycle, in which every hole is made by making an incision onto the lower surface of the plate L by means of the lower head T', and then by completing the hole with the upper head T, which subsequently makes an incision, coaxial with respect to the previous one, onto the upper surface of the plate L. The apparatus 1 can also operate according to a working cycle providing for the simultaneous execution of the aforesaid two coaxial incisions.

The specific mechanisms or kinematic mechanisms helping to obtain the linear shifting on axis AO or the angular shifting on axis AV of the assemblies G2 can obviously differ from those which have been disclosed here by mere way of example.

Finally, it is evident that, although the preceding description has been made with reference to an apparatus for making holes onto glass plates, the same ideas can be used for carrying out apparatus for drilling plates made of marble or other stony materials.

**Claims**

1. Apparatus for drilling plates of glass, marble and similar stony materials, having a supporting frame (2, 2A) and at least a drilling device (DF) mounted onto said frame (2, 2A), said device (DF) comprising two opposite drilling heads (T, T') between which a plate under working (L) is supported by supporting means (TS), each drilling head (T, T') comprising a first drilling assembly (G1, G3) having a spindle (35, 51) for controlling the rotation of a first tool (U1, U3), said first tool (U1, U3) being movable according to a respective drilling axis (A1, A3) so as to make a first incision onto the plate (L), **characterized in that** each drilling head (T, T') comprises at least a second drilling assembly (G2), which can move on a path developing substantially perpendicularly with respect to the drilling axis (A1, A3) of the first tool (U1, U3), said second drilling assembly (G2) having a second spindle (35) for controlling the rotation of a second tool (U2), said second tool (U2) being movable according to a respective drilling axis (A2) so as to make a respective incision onto the plate (L), the drilling axis of the second tool (U2) being substantially parallel to the drilling axis (A1, A3) of the first tool (U1, U3), and **in that** the device (DF) comprises adjustment means (AP, 13, 16, 17, 22-27) for positioning the second assembly (G2) of each head (T, T') in several places on its respective path, so that the drilling axis (A2) of the second tool (U2) can take several alternative parallel positions with respect to the drilling axis (A1, A3) of the first tool (U1, U3).

2. Apparatus according to claim 1, **characterized in that** said path is substantially rectilinear and **in that** the adjustment means (AP, 13, 16, 17, 22-27) comprise first means (22-27) for shifting linearly the second assembly (G2) on a shifting axis (AO) which is substantially perpendicular with respect to the drilling axis of the second tool (U2).

3. Apparatus according to claim 1, **characterized in that** said path is substantially curvilinear and **in that** the adjustment means (AP, 13, 16, 17, 22-27) comprise second means (AP, 13, 16, 17) for shifting angularly the second assembly (G2) around a rotation axis (AV) which is substantially parallel with respect to the drilling axis (A2) of the second tool (U2).

4. Apparatus according to claim 2, **characterized in that** said first adjustment means (22-27) are operative for shifting the second assembly (G2) with respect to the first assembly (G1, G3) on said path, so as to bring closer or away the drilling axis (A1, A3) of the first tool (U1, U3) and the drilling axis (A2) of the second tool (U2), and subsequently vary the distance between the incision made by the first tool (U2) and the one made by the second tool (U1).

5. Apparatus according to claim 3, **characterized in that** said second adjustment means (AP, 13, 16, 17) are operative for shifting angularly the second assembly (G2) around said rotation axis (AV), so as to vary its position with respect to the first assembly (G3).

6. Apparatus according to claim 3, **characterized in that** said second adjustment means (AP, 13, 16, 17) are operative for shifting angularly at the same time the first and second assembly (G1, G2) around said rotation axis (AV).

7. Apparatus according to claim 1, **characterized in that** the drilling device (DF) comprises a carriage (3) which can shift on a ledger (2A) belonging to the supporting frame (2) according to a first shifting axis (X), and **in that** the carriage (3) is operatively coupled with a support (4) carrying the two drilling heads (T, T'), said support (4) being movable with respect to the carriage (3) on a second shifting axis (Y), which is perpendicular to the first shifting axis (X).

8. Apparatus according to claim 7, **characterized in that** each head (T, T') comprises

   - a body (5) connected to the support (4), said body (5) being associated with a slide (13) moving on a third shifting axis (Z) perpendicular with respect to the first and to the second shifting axis (X, Y),
   - guiding and actuating means (6-12, 14-15) for shifting the slide (13) linearly with respect to the body (5) on the third shifting axis (Z).

9. Apparatus according to claim 8, **characterized in that** said adjustment means (AP, 13, 16, 17, 22-27) comprise

   - a support element (17) for the second assembly (G2), said support element (17) having first guiding means (22),
   - second guiding means (23) associated with the second assembly (G2) and cooperating with the first guiding means (22),
   - actuating means (25-27) allowing the second guiding means (23), and thus the second assembly (G2) to slide on the first guiding means (22).

10. Apparatus according to claim 8, **characterized in that** said adjustment means (AP, 13, 16, 17, 22-27) comprise

- a support element (17) for the second assembly (G2),
- means for hinging (13C, 17A, 16) the support element (17) to the slide (13),
- actuating means (AP) for moving angularly the support element (17) with respect to the slide (13).

11. Apparatus according to claim 9, **characterized in that** the first assembly (G1, G3) is supported by the support element (17).

12. Apparatus according to claim 10, **characterized in that** the first assembly (G1, G3) is supported by the support element (17).

13. Apparatus according to claim 1, **characterized in that** at least one between the first and the second assembly (G1, G2) comprises an electric motor (18, 20) beside which an actuating system (19, 21) integrating the spindle (35) is provided, a mechanical drive (31-34) being provided between the motor (18, 20) and the actuating system (19, 21).

14. Apparatus according to claim 13, **characterized in that** the actuating system (19, 21) comprises a fluid actuating arrangement (39-44) for linearly shifting the spindle (35) according to the drilling axis (A1, A2) of its respective tool (U1, U2).

15. Apparatus according to claim 1, **characterized in that** each drilling head (T, T') comprises at least a third drilling assembly (G3) having a third spindle for controlling the rotation of a third tool (U3), said third tool (U3) moving on a respective drilling axis (A3) for making a corresponding incision onto the plate (L), the drilling axis of the first, second and third tool (U2, U1, U3) being substantially parallel to one another.

16. Method for making pairs of through holes into a plate made of glass, marble and similar stony materials, **characterized in that** two pairs of incisions are made simultaneously onto each of two opposite surfaces of the plate (L), by means of the two heads (T, T') of the drilling device (DF) of the apparatus (1) according to any of the preceding claims, after placing said device in a defined position with respect to the plate (L).

17. Method according to claim 16, where

- the second drilling assemblies (G2) of each head (T, T') are shifted with respect to the first assemblies (G1) depending on the distance or on the relative angular position desired for the two holes of the pair to be made,
- the first assemblies (G1) and the second assemblies (G2) of one head (T) make through their respective first and second tool (U1, U2) two corresponding first incisions onto a first surface of the plate (L),
- the first assemblies (G1) and the second assemblies $\sqrt{} = (G2)$ of the other head (T') make through their respective first and second tool (U1, U2) two corresponding second incisions onto a second surface of the plate (L), said second incisions being coaxial with respect to the first ones.

**Patentansprüche**

1. Vorrichtung zum Bohren von Platten aus Glas, Marmor und ähnlichen steinartigen Materialien, mit einem Stützrahmen (2, 2A) und wenigstens einer Bohreinrichtung (DF), die an dem Rahmen (2, 2A) befestigt ist, wobei die Einrichtung (DF) zwei gegenüberliegende Bohrköpfe (T, T') aufweist, zwischen denen eine zu bearbeitende Platte (L) durch Haltemittel (TS) gehalten ist, wobei jeder Bohrkopf (T, T') eine erste Bohranordnung (G1, G3) mit einer Spindel (35, 51) zum Steuern der Drehbewegung eines ersten Werkzeugs (U1, U3) aufweist, wobei das erste Werkzeug (U1, U3) entlang einer entsprechenden Bohrachse (A1, A3) bewegbar ist, um einen ersten Einschnitt an der Platte (L) zu erzeugen,
**dadurch gekennzeichnet, dass**
jeder Bohrkopf (T, T') wenigstens eine zweite Bohranordnung (G2) umfasst, die entlang eines Weges, der sich im Wesentlichen senkrecht relativ zu der Bohrachse (A1, A3) des ersten Werkzeugs (U1, U3) erstreckt, bewegbar ist, wobei die zweite Bohranordnung (G2) eine zweite Spindel (35) zum Steuern der Drehbewegung eines zweiten Werkzeugs (U2) aufweist, wobei das zweite Werkzeug (U2) entlang einer entsprechenden Bohrachse (A2) bewegbar ist, um einen entsprechenden Einschnitt an der Platte (L) zu erzeugen, wobei die Bohrachse des zweiten Werkzeugs (U2) im Wesentlichen parallel zu der Bohrachse (A1, A3) des ersten Werkzeugs (U1, U3) angeordnet ist, und dass die Einrichtung (DF) Einstellmittel (AP, 13, 16, 17, 22-27) zum Positionieren der zweiten Anordnung (G2) jedes Kopfes (T, T') in mehreren Positionen auf dem entsprechenden Weg aufweist, so dass die Bohrachse (A2) des zweiten Werkzeugs (2) verschiedene alternative parallele Positionen relativ zu der Bohrachse (A1, A3) des ersten Werkzeugs (U1, U3) annehmen kann.

2. Vorrichtung nach Anspruch 1,
**dadurch gekennzeichnet, dass**
sich der Weg im Wesentlichen gradlinig erstreckt und dass die Einstellmittel (AB, 13, 16, 17, 22-27) erste Mittel (22-27) zum linearen Versetzen der zweiten Anordnung (G2) entlang einer Versetzungsachse (AO) aufweisen, die sich im Wesentlichen senkrecht relativ zu der Bohrachse des zweiten Werkzeugs (U2) erstreckt.

3. Vorrichtung nach Anspruch 1,
**dadurch gekennzeichnet, dass**
sich der Weg im Wesentlichen kurvenförmig erstreckt, und dass die Einstellmittel (AP, 13, 16, 17, 22-27) zweite Mittel (AP, 13, 16, 17) zum winkligen Versetzen der zweiten Anordnung (G2) um eine Drehachse (AV) aufweisen, die sich im Wesentlichen parallel relativ zu der Bohrachse (A2) des zweiten Werkzeugs (U2) erstreckt.

4. Vorrichtung nach Anspruch 2,
**dadurch gekennzeichnet, dass**
die ersten Einstellmittel (22-27) betätigt werden können, um die zweite Anordnung (G2) relativ zu der ersten Anordnung (G1, G3) auf dem Weg zu versetzen, um die Bohrachse (A1, A3) des ersten Werkzeugs (U1, U3) und die Bohrachse (A2) des zweiten Werkzeugs (U2) näher aneinander oder voneinander weg zu bewegen, und um den Abstand zwischen dem Einschnitt, der durch das erste Werkzeug (U2) erzeugt wird, und demjenigen, der durch das zweite Werkzeug (U1) erzeugt wird, zu variieren.

5. Vorrichtung nach Anspruch 3,
**dadurch gekennzeichnet, dass**
die zweiten Einstellmittel (AP, 13, 16, 17) betätigt werden können, um die zweite Anordnung (G2) winklig um die Drehachse (AV) zu versetzen, um ihre Position relativ zu der ersten Anordnung (G3) zu ändern.

6. Vorrichtung nach Anspruch 3,
**dadurch gekennzeichnet, dass**
die zweiten Einstellmittel (AP, 13, 16, 17) betätigt werden können, um die erste und zweite Anordnung (G1, G2) zeitgleich um die Drehachse (AV) winklig zu versetzen.

7. Vorrichtung nach Anspruch 1,
**dadurch gekennzeichnet, dass**
die Bohreinrichtung (DF) einen Schlitten (3) aufweist, der an einem Querbalken (2A), der zu dem Stützrahmen (2) gehört, entlang einer ersten Versetzungsachse (X) zu bewegen, und dass der Schlitten (3) operativ mit einer Stützeinrichtung (4), welche die beiden Bohrköpfe (T, T') hält, verbunden ist, wobei die Stützeinrichtung (4) relativ zu dem Schlitten (3) auf einer zweiten Versetzungsachse (Y) bewegbar ist, die sich senkrecht zu der ersten Versetzungsachse (X) erstreckt.

8. Vorrichtung nach Anspruch 7,
**dadurch gekennzeichnet, dass**
jeder Kopf (T, T') aufweist:

- einen Körper (5), der mit der Stützeinrichtung (4) verbunden ist, wobei der Körper (5) mit einem Schlitten (13) verbunden ist, der sich auf einer dritten Versetzungsachse (Z) bewegt, die sich senkrecht relativ zu den ersten und zweiten Versetzungsachsen (X, Y) erstreckt,
- Führungs- und Betätigungsmittel (6-12, 14-15) zum linearen Versetzen des Schlittens (13) relativ zu dem Körper (5) auf der dritten Versetzungsachse (Z).

9. Vorrichtung nach Anspruch 8,
**dadurch gekennzeichnet, dass**
die Einstellmittel (AP; 13, 16, 17, 22-27) aufweisen:

- ein Stützelement (17) für die zweite Anordnung (G2), wobei das Stützelement (17) erste Führungsmittel (22) aufweist,
- zweite Führungsmittel (23), die mit der zweiten Anordnung (G2) verbunden sind und mit den ersten Führungsmitteln (22) zusammenwirken,
- Betätigungsmittel (25-27), die es den zweiten Führungsmitteln (23) und somit der zweiten Anordnung (G2) gestatten, auf den ersten Führungsmitteln (22) zu gleiten.

10. Vorrichtung nach Anspruch 8,
**dadurch gekennzeichnet, dass**
die Einstellmittel (AP, 13, 16, 17, 22-27) aufweisen:

- ein Stützelement (17) für die zweite Anordnung (G2),
- Mittel zum Einhängen (13c, 17a, 16) des Stützelements (17) an dem Schlitten (13),
- Betätigungsmittel (AP) zum winkligen Bewegen des Stützelements (17) in Bezug auf den Schlitten (13).

11. Vorrichtung nach Anspruch 9,
**dadurch gekennzeichnet, dass**
die erste Anordnung (G1, G3) durch das Stützelement (17) gehalten ist.

12. Vorrichtung nach Anspruch 10,
**dadurch gekennzeichnet, dass**
die erste Anordnung (G1, G3) durch das Stützelement (17) gehalten ist.

13. Vorrichtung nach Anspruch 1,

**dadurch gekennzeichnet, dass**
die erste und/oder die zweite Anordnung (G1, G2) einen Elektromotor (18, 20) umfassen, neben dem ein Betätigungssystem (19, 21) mit der Spindel (35) vorgesehen ist, und einem mechanischen Antrieb (31-34) umfasst, der zwischen dem Motor (18, 20) und dem Betätigungssystem (19, 21) vorgesehen ist.

14. Vorrichtung nach Anspruch 13,
**dadurch gekennzeichnet, dass**
Betätigungssystem (19, 21) eine Fluidbetätigungsanordnung (39-44) umfasst, um die Spindel (35) linear entlang der Bohrachse (A1, A2) ihres entsprechenden Werkzeugs (U1, U2) zu versetzen.

15. Vorrichtung nach Anspruch 1,
**dadurch gekennzeichnet, dass**
jeder Bohrkopf (T, T') wenigstens eine dritte Bohranordnung (G3) aufweist, die eine dritte Spindel zum Steuern der Drehbewegung eines dritten Werkzeugs (U3) umfasst, wobei das dritte Werkzeug (U3) auf einer entsprechenden Bohrachse (A3) bewegt wird, um einen entsprechenden Einschnitt an der Platte (L) zu erzeugen, wobei die Bohrachse des ersten, des zweiten und des dritten Werkzeugs (U2, U1, U3) im Wesentlichen parallel zueinander angeordnet sind.

16. Verfahren zum Erzeugen von Durchgangslochpaaren in einer Platte aus Glas, Marmor oder ähnlichen steinartigen Materialien,
**dadurch gekennzeichnet, dass**
zwei Paare von Einschnitten gleichzeitig an jeder der beiden gegenüberliegenden Flächen der Platte (L) mit Hilfe der beiden Köpfe (T, T') der Bohreinrichtung (DF) der Vorrichtung (1) nach einem der vorhergehenden Ansprüche erzeugt werden, nachdem die Einrichtung in einer definierten Position relativ zur Platte (L) positioniert wurde.

17. Verfahren nach Anspruch 16, wobei

- die zweiten Bohranordnungen (G2) jedes Kopfes (T, T') in Bezug auf die ersten Anordnungen (G1) in Abhängigkeit von dem Abstand oder von der relativen Winkelposition versetzt werden, die für die beiden Löcher des zu erzeugenden Paares gewünscht ist,
- die ersten Anordnungen (G1) und die zweiten Anordnungen (G2) eines Kopfes (T) mit Hilfe ihrer entsprechenden ersten und zweiten Werkzeuge (U1, U2) zwei entsprechende erste Einschnitte an einer ersten Fläche der Platte (L) erzeugen,
- die ersten Anordnungen (G1) und die zweiten Anordnungen (G2) des anderen Kopfes (T') mit Hilfe ihrer entsprechenden ersten und zweiten Werkzeuge (U1, U2) zwei entsprechende zweite Einschnitte von einer zweiten Fläche der Platte (L) erzeugen, wobei die zweiten Einschnitte in Bezug auf die ersten koaxial angeordnet sind.

**Revendications**

1. Appareil pour percer des plaques de verre, de marbre et de matériaux pierreux similaires, ayant un bâti de support (2, 2A) et au moins un dispositif de perçage (DF) monté sur ledit bâti (2, 2A), ledit dispositif de perçage (DF) comprenant deux têtes de perçage opposées (T, T') entre lesquelles une plaque à usiner (L) est supportée par des moyens de support (TS), chaque tête de perçage (T, T') comprenant un premier ensemble de perçage (G1, G3) équipé d'une broche (35, 51) pour commander la rotation d'un premier outil (U1, U3), ledit premier outil (U1, U3) pouvant se déplacer selon un axe de perçage respectif (A1, A3) pour effectuer une première incision sur la plaque (L), **caractérisé en ce que** chaque tête de perçage (T, T') comprend au moins un deuxième ensemble de perçage (G2) qui peut se déplacer en suivant un trajet sensiblement perpendiculaire à l'axe de perçage (A1, A3) du premier outil (U1, U3), ledit deuxième ensemble de perçage (G2) ayant une deuxième broche (35) pour commander la rotation d'un deuxième outil (U2), ledit deuxième outil (U2) pouvant se déplacer selon un axe de perçage respectif (A2) pour effectuer une incision respective sur la plaque (L), l'axe de perçage du deuxième outil (U2) étant sensiblement parallèle à l'axe de perçage (A1, A3) du premier outil (U1, U3), et **en ce que** le dispositif de perçage (DF) comprend des moyens d'ajustement (AP, 13, 16, 17, 22 - 27) pour positionner le deuxième ensemble de perçage (G2) de chaque tête (T, T') dans plusieurs emplacements situés sur son trajet respectif, de façon à ce que l'axe de perçage (A2) du deuxième outil (U2) puisse prendre plusieurs positions parallèles alternatives par rapport à l'axe de perçage (A1, A3) du premier outil (U1, U3).

2. Appareil selon la revendication 1, **caractérisé en ce que** ledit trajet est sensiblement rectiligne et **en ce que** les moyens d'ajustement (AP, 13, 16, 17, 22 - 27) comprennent des premiers moyens (22 - 27) pour décaler linéairement le deuxième ensemble (G2) sur un axe de décalage (AO) qui est sensiblement perpendiculaire à l'axe de perçage du deuxième outil (U2).

3. Appareil selon la revendication 1, **caractérisé en ce que** ledit trajet est sensiblement curviligne et **en ce que** les moyens d'ajustement (AP, 13, 16, 17, 22 à 27) comprennent des deuxièmes moyens (AP, 13, 16, 17) pour décaler angulairement le deuxième ensemble (G2) autour d'un axe de rotation (AV) qui est sensiblement parallèle à l'axe de perçage (A2) du deuxième outil (U2).

4. Appareil selon la revendication 2, **caractérisé en ce que** lesdits premiers moyens d'ajustement (22 - 27) peuvent être actionnés pour décaler le deuxième ensemble (G2) par rapport au premier ensemble (G1, G3) sur ledit trajet, pour approcher ou éloigner l'axe de perçage (A1, A3) du premier outil (U1, U3) et l'axe de perçage (A2) du deuxième outil (U2), puis faire varier la distance entre l'incision effectuée par le premier outil (U2) et celle effectuée par le deuxième outil (U1).

5. Appareil selon la revendication 3, **caractérisé en ce que** lesdits deuxièmes moyens d'ajustement (AP, 13, 16, 17) peuvent être actionnés pour décaler angulairement le deuxième ensemble (G2) autour dudit axe de rotation (AV), pour faire varier sa position par rapport au premier ensemble (G3).

6. Appareil selon la revendication 3, **caractérisé en ce que** lesdits deuxièmes moyens d'ajustement (AP, 13, 16, 17) peuvent être actionnés pour décaler angulairement au même moment le premier et le deuxième ensembles (G1, G2) autour dudit axe de rotation (AV).

7. Appareil selon la revendication 1, **caractérisé en ce que** le dispositif de perçage (DF) comprend un chariot (3) qui peut se décaler sur une moise (2A) appartenant au bâti de support (2) suivant un premier axe de décalage (X), et **en ce que** le chariot (3) est couplé en fonctionnement à un support (4) transportant les deux têtes de perçage (T, T'), ledit support (4) pouvant se déplacer par rapport au chariot (3) sur un deuxième axe de décalage (Y), qui est perpendiculaire au premier axe de décalage (X).

8. Appareil selon la revendication 7, **caractérisé en ce que** chaque tête (T, T') comprend un corps (5) relié au support (4), ledit corps (5) étant associé à une coulisse (13) qui se déplace sur un troisième axe de décalage (Z) perpendiculaire aux premier et deuxième axes de décalage (X, Y), des moyens de guidage et d'actionnement (6 - 12, 14 - 15) permettant de décaler la coulisse (13) linéairement par rapport au corps (5) sur le troisième axe de décalage (Z).

9. Appareil selon la revendication 8, **caractérisé en ce que** lesdits moyens d'ajustement (AP, 13, 16, 17, 22 - 27) comprennent un élément de support (17) pour le deuxième ensemble (G2), ledit élément de support (17) ayant des premiers moyens de guidage (22), des deuxièmes moyens de guidage (23) associés au deuxième ensemble (G2) et coopérant avec les premiers moyens de guidage (22), des moyens d'actionnement (25 - 27) permettant aux deuxièmes moyens de guidage (23), et donc au deuxième ensemble (G2), de coulisser sur les premiers moyens de guidage (22).

10. Appareil selon la revendication 8, **caractérisé en ce que** lesdits moyens d'ajustement (AP, 13, 16, 17, 22 - 27) comprennent un élément de support (17) pour le deuxième ensemble (G2), des moyens pour articuler (13C, 17A, 16) l'élément de support (17) à la coulisse (13), des moyens d'actionnement (AP) pour déplacer angulairement l'élément de support (17) par rapport à la coulisse (13).

11. Appareil selon la revendication 9, **caractérisé en ce que** le premier ensemble (G1, G3) est supporté par l'élément de support (17).

12. Appareil selon la revendication 10, **caractérisé en ce que** le premier ensemble (G1, G3) est supporté par l'élément de support (17).

13. Appareil selon la revendication 1, **caractérisé en ce que** au moins un parmi les premier et deuxième ensembles (G1, G2) comprend un moteur électrique (18, 20) à côté duquel est disposé un système d'actionnement (19, 21) intégrant la broche (35), un dispositif d'entraînement mécanique (31 - 34) étant disposé entre le moteur (18, 20) et le système d'actionnement (19, 21).

14. Appareil selon la revendication 13, **caractérisé en ce que** le système d'actionnement (19, 21) comprend un agencement d'actionnement fluidique (39 - 44) pour décaler linéairement la broche (35) suivant l'axe de perçage (A1, A2) de son outil respectif (U1, U2).

15. Appareil selon la revendication 1, **caractérisé en ce que** chaque tête de perçage (T, T') comprend au moins un troisième ensemble de perçage (G3) ayant une troisième broche pour commander la rotation d'un troisième outil (U3), ledit troisième outil (U3) se déplaçant sur un axe de perçage respectif (A3) pour effectuer une incision correspondante sur la plaque (L), l'axe de perçage des premier, deuxième et troisième outil (U2, U1, U3) étant sensiblement parallèles les uns aux autres.

16. Procédé pour fabriquer des paires de trous traversants dans une plaque de verre, de marbre ou de matériaux pierreux similaires, **caractérisé en ce que** deux paires d'incision sont effectuées simultanément sur chacune des deux surfaces opposées de la plaque (L), au moyen de deux têtes (T, T') du dispositif de perçage (DF) de l'appareil (1) selon l'une quelconque des revendications précédentes, après avoir placé ledit dispositif dans une position définie par rapport à la plaque (L).

**17.** Procédé selon la revendication 16, dans lequel les deuxièmes ensembles de perçage (G2) de chaque tête (T, T') sont décalés par rapport aux premiers ensembles (G1) en fonction de la distance ou de la position angulaire relative souhaitée des deux trous de la paire de trous à fabriquer,
les premiers ensembles (G1) et les deuxièmes ensembles (G2) d'une tête (T) effectuent par leurs premier et deuxième outil respectifs (U1, U2) deux premières incisions correspondantes sur une première surface de la plaque (L),
les premiers ensembles (G1) et les deuxièmes ensembles (G2) de l'autre tête (T') effectuent par leurs premier et deuxième outils respectifs (U1, U2) deux deuxièmes incisions correspondantes sur une deuxième surface de la plaque (L), lesdites deuxièmes incisions étant coaxiales par rapport aux premières incisions.

**Fig. 1**

X

2A

3

4

Z

T

DF

2

4A

TS

4B

L

T'

Y

TS

MS

SC

DP

EP 1 402 980 B1

Fig. 2

Fig. 3

Fig. 4

Fig. 5

# Fig. 6

# Fig. 7

Fig. 8

# Fig. 9

**EP 1 402 980 B1**

**REFERENCES CITED IN THE DESCRIPTION**

**Patent documents cited in the description**

- GB 2007122 A